# EUROPÄISCHE PATENTANMELDUNG

(11) **EP 1 143 345 A2**
(43) Veröffentlichungstag der Anmeldung: **10.10.2001**
(21) Anmeldenummer: 01104304.9
(22) Anmeldetag: 22.02.2001
(51) Int. Cl.: G06F 15/173, H04L 12/46

(54) **Rechnersystem für ein internes Computernetzwerk**

(30) Priorität: 06.03.2000 DE 10010349; 16.09.2000 DE 10045922
(71) Anmelder: Cluster Labs GmbH, 14055 Berlin (DE)
(72) Erfinder: Worch, Andreas, c/o Metryxx GmbH, 14055 Berlin (DE)
(74) Vertreter: Liesegang, Eva

(57) **Zusammenfassung**

Internes Computernetzwerk, bestehend aus einer Vielzahl von elektronischen Rechnerteilsystemen zur Bildung eines Mehrprozessor- oder Großrechners, bei dem auf einer Leiterplatte eine Vielzahl von Steckplätzen für CPU-Einheiten (11) angeordnet sind. Die CPU-Einheiten (11) sind über Lokalbusse (23) mit Backplains (22a, 22b, 22c, 22d, 22e) verbunden. Die Backplains (22a, 22b, 22c, 22d, 22e) wiederum verbinden die Slavecards (17, 18, 19) mit einer Mastercard.

## Beschreibung

Die Erfindung betrifft ein internes Computernetzwerk, bestehend aus einer Vielzahl von elektronischen Rechnerteilsystemen zur Bildung eines Mehrprozessor- oder Großrechners.

Üblicherweise kommunizieren mehrere CPU-Einheiten in einem Multiprozessor-System über Netzwerkadapter was das Netzwerk durch den anfallenden Datenverkehr belastet und langsamer arbeiten läßt. Eine alleinige Steigerung der Taktfrequenz der Prozessoren von beispielsweise 400 auf 500 MHz bedeutet eine Steigerung der Rechengeschwindigkeit von nur 25%, von denen bei dem Gesamtsystem nur noch maximal 5% übrig bleiben.

Aufgabe der vorliegenden Erfindung ist es, ein Rechnersystem zu schaffen, das in der Lage ist die Rechenleistung den wachsenden Anforderungen seiner Benutzer anzupassen, die Rechenleistung des Systems zu erhöhen und dabei die Datenverarbeitungsgeschwindigkeit konstant hoch zu halten.

Gelöst wird diese Aufgabe durch die Maßnahmen gemäß Anspruch 1, insbesondere durch ein internes Computernetzwerk, bestehend aus einer Vielzahl von elektronischen Rechnerteilsystemen zur Bildung eines Mehrprozessor-oder Großrechners, bei dem auf einer Leiterplatte eine Vielzahl von Steckplätzen für CPU-Einheiten angeordnet sind, die CPU-Einheiten über Lokalbusse mit Backplanes verbunden sind, diese wiederum mit Slavecards, auf diesen jeweils eine Vielzahl von Steckplätzen für Koprozessoren aus DSP-Einheiten und/oder PLD-Einheiten auf jeweils verschiedenen Karten einer Netzwerkanbindung angeordnet sind.

Das Rechnersystem kann mit einer Prozessorbrücken-Slavecard (PB-Slavecard) abgeschlossen sein, die eine Vielzahl von Steckplätzen an Pozessorbrückeneinheiten (PB-Einheiten) aufweisen und die eine direkte Verbindung der Rechnerteilsysteme gewährleisten, ohne das Local-Area-Network (LAN) zu belasten.

Durch diese Maßnahmen ist die Möglichkeit gegeben, beliebig viele CPU-Einheiten miteinander zu verbinden. Dadurch wird ein Datenstau auf einem LAN vermieden und die Rechenleistung des Netzwerkes beschleunigt.

Eine beliebige Anzahl von CPU-Einheiten kommuniziert nicht wie üblicher Weise über NA-Adapter miteinander, sondern über Prozessorbrücken. Dabei weist jede CPU-Einheit eine eigene, zusteckbare Prozessorbrücke auf, über die sie mit einer anderen CPU-Einheit eines anderen Rechenerteilsystem kommunizieren kann. In einem Computer können beliebig viele Rechenerteilsysteme untereinander mittels dieser Prozessorbrücken verbunden sein.

Es entsteht ein internes Netzwerk in Form eines Multiprozessor-System. Die die verschiedenen CPU-Einheiten verbindenden Prozessorbrückenadapter können beispielsweise zu einer Ringtopologie geschaltet sein. Die verschiedenen Prozessoren und Koprozessoren der Rechnerteilsysteme befinden sich jeweils in beliebiger Anzahl auf eigenen Leiterplatten die über Backplanes miteinander verbunden sind. Dadurch wird es möglich, beispielsweise unterschiedlich Anwendungsprogramme parallel laufen zu lassen und von beliebig vielen CPU-Einheiten auf einer Leiterplatte (Mastercard) verwalten zu lassen, ohne dass der anfallende Datenverkehr die Rechenleistung einer Rechnereinheit verlangsamt oder das Netzwerk überlastet.

Unterschiedliche Koprozessoren können einer CPU-Einheit zugeordnet werden und dabei flexibel angesteuert werden. Auch wird mit dieser Anordnung eine Interprozessorenkommunikation ermöglicht. Mit einer Mastercard können CPU 1 bis CPU n Prozessoren angeordnet sein. Als Betriebssysteme für so ein Multiprozessor-System können beispielsweise Linux oder vergleichbare Unix-Derivate dienen.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- Figur 1: ein schematisches Blockschaubild einer Leiterplatte (Mastercard) mit beliebig vielen CPU-Einheiten, die an Backplanes angeschlossen sind;
- Figur 2: ein schematisches Blockschaubild einer Leiterplatte (Slavecard) mit beliebig vielen DSP-Einheiten, die an Backplanes angeschlossen sind;
- Figur 3: ein schematisches Blockschaubild einer Leiterplatte (Slavecard) mit beliebig vielen PLD-Einheiten, die an Backplanes angeschlossen sind;
- Figur 4: ein schematisches Blockschaubild einer Leiterplatte (Slavecard) mit beliebig vielen Netzwerk-Adapter-Einheiten (NA-Einheit), die an Backplanes angeschlossen sind;
- Figur 5: ein schematisches Blockschaubild einer Leiterplatte (Slavecard) mit beliebig vielen Prozessorbrücken-Einheiten (PB-Einheiten), die an Backplanes angeschlossen sind;
- Figur 6: eine isometrische Darstellung der einzelnen Rechnerteilsysteme, die über PB-Einheiten miteinander verbunden und in ein handelsübliches 19-Zoll-Gehäuse eingeschoben sind; und
- Figur 7: ein schematisches Blockdiagramm der ausgebildeten Verbindungen zwischen einzelnen Bauteilen.

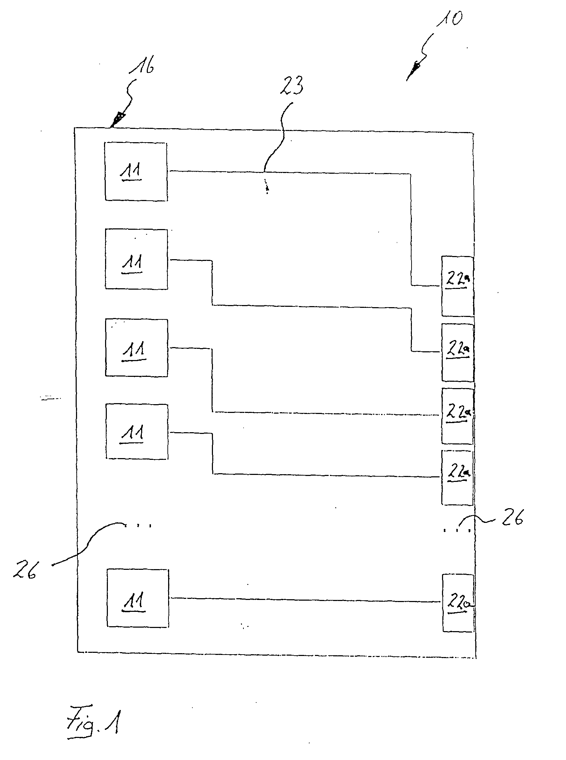

In der Figur 1 ist eine Central-Processing-Unit-Mastercard 16 (CPU-Mastercard) dargestellt, die in 19-Zoll-Technologie ausgeführt ist. Auf ihr befinden sich Vielzahl von Steckplätzen von Steckplätze 26 für CPU-Einheiten 11, die auf der CPU-Mastercard 16 angeordnet sind.

Die CPU-Einheiten 11 sind über Lokalbusse 23 mit Backplanes 22a verbunden. Die Backplanes 22a dienen zur Datenübertragung und zum Informationsaustausch zwischen den einzelnen Komponenten der Rechnerteilsysteme 10.

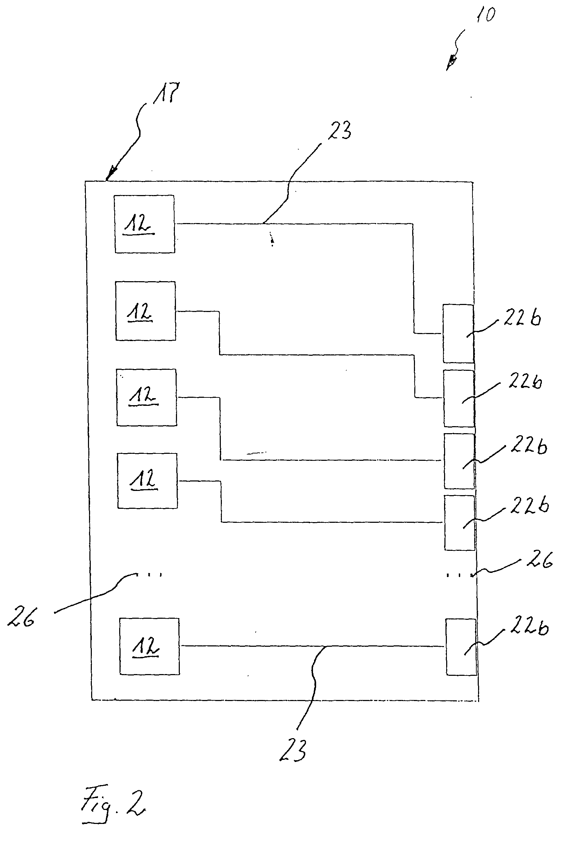

Die in Figur 2 dargestellte Digitale-Signal-Processor-Slavecard 17 (DSP-Slavecard) weist eine Vielzahl von Steckplätzen 26 für DSP-Einheiten 12 auf. Die Prozessoren sind wiederum über Lokalbusse 23 an die Backplanes 22b angeschlossen.

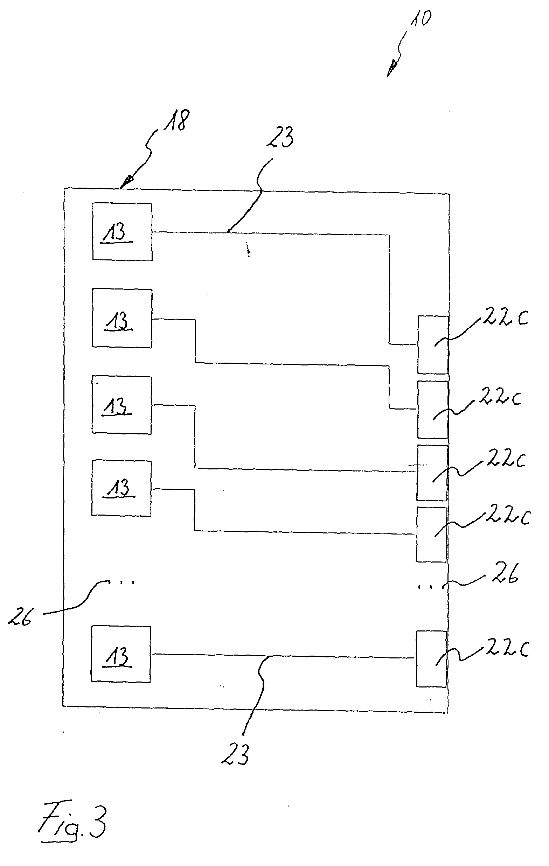

In Figur 3 ist die Leiterplatte einer (Programmable-Logic-Device-Slavecard 18 (PLD-Slavecard) dargestellt. Auf der PLD-Slavecard 18 sind eine Vielzahl von PLD-Einheiten 13 in Steckplätzen 26 aufgesteckt. Die Anzahl der Steckplätze 26 ist nur durch die Bauart der Leiterplatte begrenzt. Die PLD-Einheiten 13 sind auch hier über Lokalbusse 23 mit Backplanes 22c verbunden.

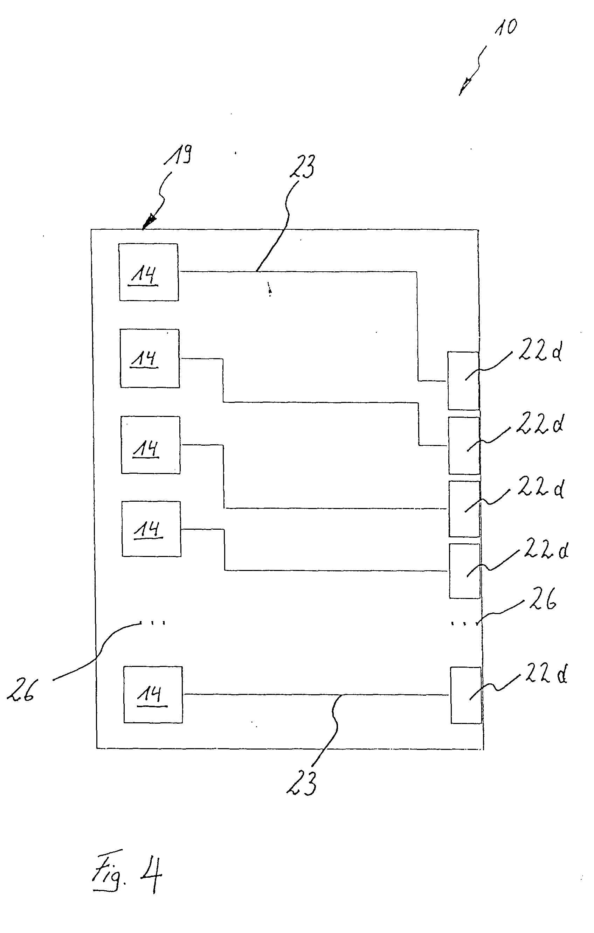

In der Figur 4 ist die Leiterplatte für eine Na-Slavecard 19 dargestellt. Die Network-Adapter-Slavecard 19 (NA-Slavecard) ist mit einer Vielzahl von Steckplätzen 26 ausgestattet, auf die die NA-Einheiten 14 aufgesteckt werden können. Lokalbusse 23 verbinden die NA-Einheiten 14 mit ihren Backplanes 22d, die damit mit dem gesamten Rechnersystem 10 verbunden sind.

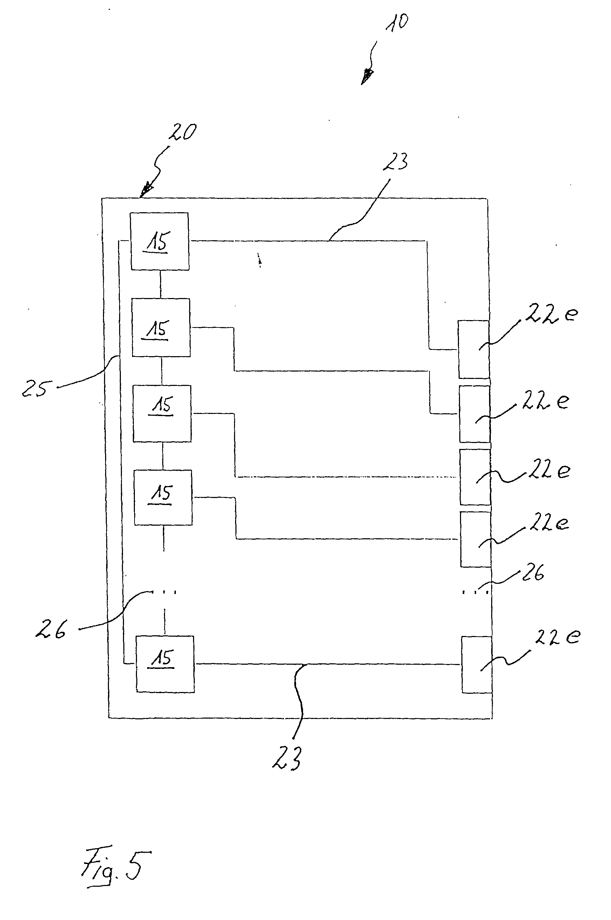

Figur 5 zeigt eine Processor-Bridge-Slavecard 20 (PB-Slavecard), die mit einer Vielzahl von Steckplätzen 26 für Processor-Bridge-Einheiten 15 (PB-Einheiten) versehen ist. Diese sind über Lokalbusse 23 mit ihren Backplanes 22e verbunden. Die PB-Einheiten 15 sind untereinander durch Processor-Bridge-Connections 25 verbunden.

Als Processor-Bridge-Connections 25 besonders geeignet sind PCI- oder SCI-Busse. Besonders der PCI-Bus unterstützt das Bus-Mastering. Adapter können entweder als Master- oder Slave-Baugruppe arbeiten. Masterfähige Adapter ermöglichen insbesondere beim Einsatz von Multitasking-Betriebssystem eine erhebliche Prozessorentlastung. Die Processor-Bridge-Connections 25 können als eine Ringtopologie ausgebildet sein.

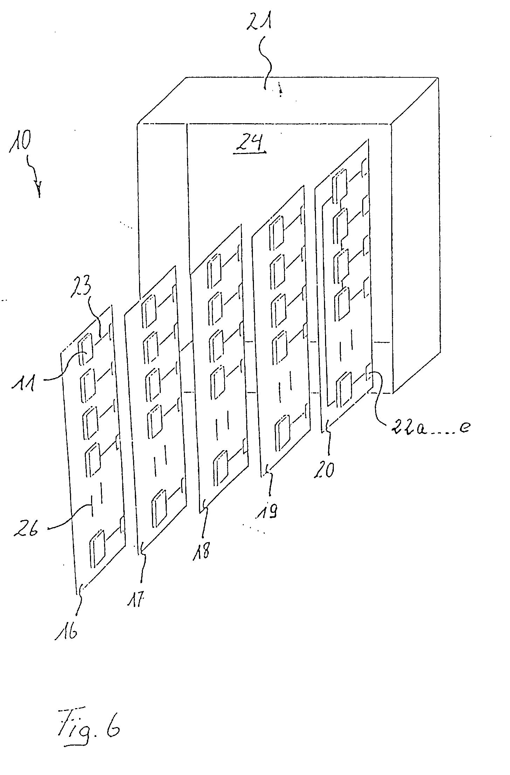

In der Figur 6 ist ein, in ein handelsübliches 19-Zoll-Gehäuse 21 untergebrachtes Gesamtsystem dargestellt. Die Gehäuserückseite 24 des 19-Zoll-Gehäuses 21 ist mit nicht näher dargestellten Steckplätzen versehen, in die CPU-Mastercards 16, DSP-Slavecards 17, PLD-Slavecards 18, NA-Slavecards 19 und PB-Slavecards 20 eingesteckt werden können.

Durch diese Maßnahmen entsteht ein Mehrprozessor- oder Großrechner, der aus einer Vielzahl von Rechnerteilsystemen 10 zusammengesetzt sein kann. Die Rechnerteilsysteme 10 sind mit einer horizontalen Aufteilung, die über ihre jeweiligen Lokalbusse 23 mit ihren Backplanes 22a, 22b, 22c, 22d oder 22e verbunden.

Dabei ermöglichen PB-Slavecards 20 über eine Vielzahl von Steckplätzen 26 die Kommunikation mit den vertikal angeordneten CPU-Einheiten 11. Dadurch ist jedes horizontale Rechnerteilsystem 10 in ein internes Hochgeschwindigkeits-Netzwerk eingebunden.

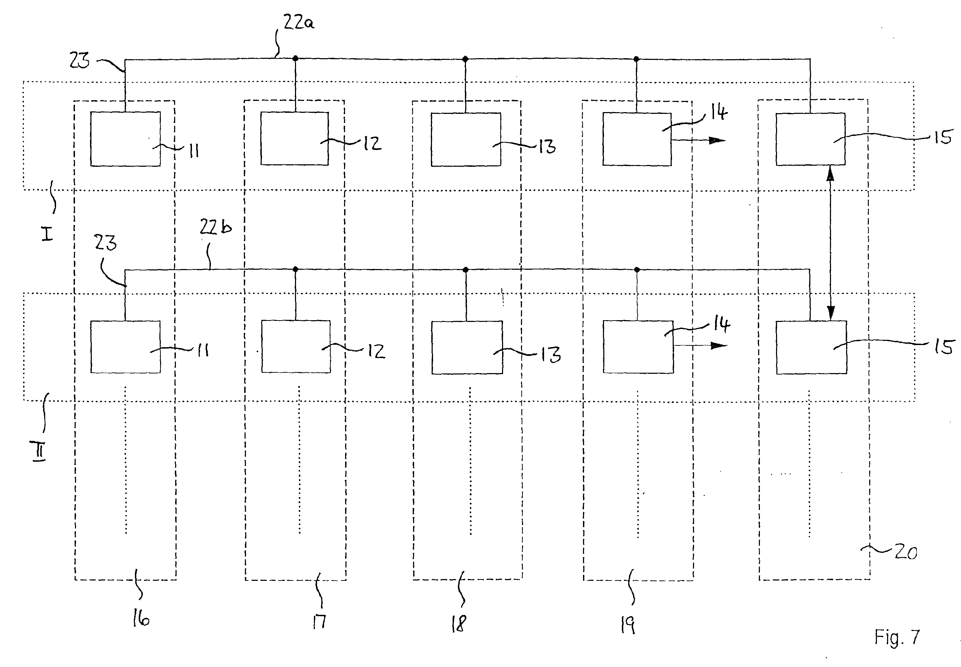

Figur 7 zeigt eine schematische Darstellung der ausgebildeten Verbindungen zwischen den einzelnen Bauteilen, wenn die CPU-Mastercard 16, die DSP-Slavecard 17, die PLD-Slavecard 18, die NA-Slavecard 19 sowie die PB-Slavecard 20 in das Gehäuse 21 eingesteckt sind. Mit Hilfe der Lokalbusse 23 und der jeweiligen Backplane 22a, 22b, ... sind jeweilige horizontale Rechnersysteme I, II, ... gebildet.

Die horizontalen Rechnersysteme I, II, ... tauschen Daten über die Processor-Bridge-Einheiten 15 auf der PB-Slavecard 20 aus. Darüber hinaus können die horizontalen Rechnersysteme I, II, ... auch über den jeweiligen Netzwerkadapter 14 in bekannter Weise Daten mit dem LAN austauschen.

Mit Hilfe der beschriebenen Anordnung ist es möglich, daß die mehreren CPU-Einheiten 11, die jeweils über einen eigenen Speicher verfügen und ein eigenes Betriebssystem nutzen, sich deshalb von SMP-Maschinen (SMP - Symmetrische Multiprozessor Maschinen) unterscheiden, einerseits über jeweilige Netzwerkadapter-Einheiten 14 mit dem Netzwerk (LAN) eines Mehrprozessors- oder Großrechnersystem verbunden sind, wobei die mehreren CPU-Einheiten 11 Teil dieses Netzwerks sind. Andererseits ist mit der beschriebenen Anordnung, insbesondere den Lokalbussen 23, den Steckplätzen 22a, 22b, 22c, 22d, 22e auf der Backplane 22 und den Processor-Bridge-Einheiten 15 auf der PB-Slavecard 20, ein internes Netzwerk gebildet, über welches ein Datenaustausch zwischen den verschiedenen, horizontalen Rechnersystemen I, II, ..., insbesondere den CPU-Einheiten 11 ausgeführt werden kann.

Auf diese Weise ist eine Möglichkeit geschaffen, Mehrprozessor- oder Großrechner mit einer Vielzahl weiterer Rechnerteilsysteme 10 zu ergänzen bzw. aufzurüsten. Diese ergänzten Rechnerteilsysteme führen einen wesentlichen Teil des notwendigen Datenverkehrs über das interne Netzwerk aus, welches insbesondere mit Hilfe der Lokalbusse 23 und den Processor-Bridge-Einheiten 15 gebildet ist.

Das Hinzufügen von Rechnerteilsystemen 10 zu dem Mehrprozessor- oder Großrechner führt somit nicht zu einer Überlastung des hierzu meist parallel existierenden Netzwerks (LAN) des Mehrprozessor- oder Großrechners, an welches die mehreren CPU-Einheiten 11 über die Netzwerkadapter-Einheiten 14 gekoppelt sind. Auf diese Weise können innerhalb des Mehrprozessor- oder Großrechners ein oder mehrere interne Netzwerke gebildet werden, und die Verbindungen des hierzu meist parallel ausgebildeten Netzwerks des Mehrprozessor- oder Großrechners werden von den Rechnerteilsystemen 10 nur im Bedarfsfall genutzt, beispielsweise für den Datenverkehr zwischen zwei internen Netzwerken, die jeweils in der beschriebenen Art gebildet sind, zur Konfiguration oder für einen Bootvorgang.

In gleicher Weise, wie die mehreren CPU-Einheiten 11, können DSPs mittels DSP-Slavecards 17 sowie PLDs mittels PLD-Slavecards 18 an das interne Netzwerk angekoppelt werden (vgl. Figur 7). Mit Hilfe der in Figur 7 dargestellten Anordnung können die mehreren, auf einer einzelnen Platine 16 angeordneten CPU-Einheiten 11 über die Lokalbusse 23, die Backplane 22 sowie die PB-Einheiten 15 mit den DSPs 12 und PLDs 13 elektronisch Daten austauschen. Die PLDs 13 und/oder die DSPs 12 können den mehreren CPU-Einheiten 11 aufgabenabhängig zugeordnet werden.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

### Bezugszeichen

- 10: Rechnerteilsystem
- 11: CPU-Einheit
- 12: DSP-Einheit
- 13: PLD-Einheit
- 14: NA-Einheit
- 15: PB-Einheit
- 16: CPU-Mastercard
- 17: DSP-Slavecard
- 18: PLD-Slavecard
- 19: NA-Slavecard
- 20: PB-Slavecard
- 21: 19-Zoll-Gehäuse
- 22a: Backplane
- 22b: Backplane
- 22c: Backplane
- 22d: Backplane
- 22e: Backplane
- 23: Lokalbus
- 24: Gehäuserückseite
- 25: Processor-Bridge-Verbindung
- 26: Steckplatz

## Patentansprüche

1. Internes Computernetzwerk, aufweisend eine Vielzahl von elektronischen Rechnerteilsystemen zur Bildung eines Mehrprozessor- oder Großrechners, bei dem auf einer Leiterplatte eine Vielzahl von Steckplätzen für CPU-Einheiten (11) angeordnet sind, wobei die CPU-Einheiten (11) über Lokalbusse (23) mit Backplanes (22a, 22b, 22c, 22d, 22e) verbunden sind, wobei die Backplanes (22a, 22b, 22c, 22d, 22e) mit Slavecards (17, 18, 19) verbunden sind, auf denen jeweils eine Vielzahl von Steckplätzen (26) für DSP-Einheiten (12) und/oder PLD-Einheiten (13) und/oder Netzwerkanbindungen (14) angeordnet sind.

2. Computernetzwerk nach Anspruch 1, **gekennzeichnet durch** PB-Einheiten (15), die mit jeweils einer PB-Slavecard (20) abgeschlossen sind.

3. Computernetzwerk nach Anspruch 1 oder 2, **dadurch gekennzeichnet, daß** eine Vielzahl von Steckplätzen (26) für PB-Einheiten (15) vorgesehen ist, die eine Verbindung von Rechnerteilsystemen (10) gewährleisten.

4. Computernetzwerk nach einem der Ansprüche 1 bis 3, **dadurch gekennzeichnet, daß** eine CPU-Einheit (11), eine DSP-Einheit (12), eine PLD-Einheit (13) und eine Netzwerkanbindung (14) ein Rechnerteilsystem (10) bilden, das über eine PB-Einheit (15) mit anderen Rechnerteilsystemen verbunden ist.

5. Computernetzwerk nach einem oder mehreren der Ansprüche 1 bis 4, **dadurch gekennzeichnet, daß** Koprozessoren über Lokalbusse (23) an die CPU-Einheiten (11) angeschlossen sind.

6. Computernetzwerk nach einem oder mehreren der Ansprüche 1 bis 5, **dadurch gekennzeichnet, daß** die PLDs (13) über Lokalbusse (23) an die CPU-Einheiten (11) angeschlossen sind.

7. Computernetzwerk nach einem oder mehreren der Ansprüche 1 bis 6, **dadurch gekennzeichnet, daß** jede der CPU-Einheiten (11) über ein eigenes Betriebssystem verfügt.

8. Computernetzwerk nach einem oder mehreren der Ansprüche 1 bis 7, **dadurch gekennzeichnet, daß** parallel arbeitende Rechnerteilsysteme (10) vorgesehen sind.

9. Computernetzwerk nach einem oder mehreren der Ansprüche 1 bis 8, **dadurch gekennzeichnet, daß** über die PB-Einheiten (15) kommunizierende CPU-Einheiten (11) vorgesehen sind, wobei jeder CPU-Einheit eine eigene PB-Einheit (15) zugeordnet ist.

10. Computernetzwerk nach einem oder mehreren der Ansprüche 1 bis 9, **dadurch gekennzeichnet, daß** auf einer CPU-Mastercard (16) mehrere Benutzeranwendungen ausgeführt werden.

11. Computernetzwerk nach einem oder mehreren der Ansprüche 1 bis 10, **dadurch gekennzeichnet, daß** über mehrere der CPU-Einheiten (11) verschiedene Anwendungsprogramme verteilt sind und von mehreren Rechnerteilsystemen (10) ausgeführt werden.

12. Computernetzwerk nach einem oder mehreren der Ansprüche 1 bis 11, **dadurch gekennzeichnet, daß** in der 19-Zoll-Technologie ausgeführte CPU-Mastercards (16) und/oder Slavecards (17, 18, 19, 20) vorgesehen sind.

13. Computernetzwerk nach einem oder mehreren der Ansprüche 1 bis 12, **dadurch gekennzeichnet, daß** die Rechnerteilsysteme (10) räumlich getrennt in einem PC-Gehäuse (21) angeordnet sind.
